Europäisches Patentamt

European Patent Office

Office européen des brevets

(19)

(11) Veröffentlichungsnummer: **0 141 894**
A2

## (12) EUROPÄISCHE PATENTANMELDUNG

(21) Anmeldenummer: **84103470.5**

(22) Anmeldetag: **29.03.84**

(51) Int. Cl.⁴: **B 60 G 5/04**, F 16 F 1/38

(30) Priorität: **04.11.83 DE 3339940**

(43) Veröffentlichungstag der Anmeldung: **22.05.85**
**Patentblatt 85/21**

(84) Benannte Vertragsstaaten: **AT DE FR GB IT**

(71) Anmelder: **Jörn, Frieda, Porschestrasse 10,
D-7012 Fellbach (DE)**

(72) Erfinder: **Jörn, Raoul, Post Wasserburg a.B.,
D-8992 Hengnau Nr.53 1/7 (DE)**

(74) Vertreter: **Neubauer, Hans-Jürgen, Dipl.-Phys.,
Fauststrasse 30, D-8070 Ingolstadt (DE)**

(54) Gelenke eines Doppelachsaggregats.

(57) Die Erfindung betrifft Gelenke (21) eines Doppelachsaggregats mit zwei auf Blattfedern (4) abgestützten Achsen für Lastkraftwagen, Transporter oder Omnibusse. Die Gelenke (21) liegen hier unter den Blattfedermitten und sind auf beiden Seiten der Fahrgestell-Längsträger (7) unabhängig voneinander auf je einem am Längsträger (7) befestigten Stehbolzen (14) angebracht. Es wird vorgeschlagen, die Gelenke (21) aus zwei antisymmetrisch auf die Stehbolzen (14) aufgesteckte Gummi-Metall-Buchsen (15, 16) mit endseitigen Flanschen (17, 18) zu bilden. Diese Gummi-Metall-Buchsen (15, 16) werden zwischen den Flanschen (17, 18) von einem Aufnahmeauge (6) umfaßt, das mit Hilfe von Federbriden (5) mit dem Blattfederpaket (4) verbunden ist. Das Gelenk (21) ist mit Hilfe einer Druckplatte (20), die senkrecht zum Stehbolzen (14) liegt, axial zusammenspannbar, wobei die Befestigung der Gummi-Metall-Buchsen (15, 16) durch das axiale Anziehen der Druckplatte (20) und vom in der Buchsenlänge überstehenden Gummi erfolgt. Die Verformungen im Gelenk (21) sind daher gleit- und reibungsfrei und erfolgen nur durch Molekularverformung des elastischen Gummis.

PATENTANWALT

DIPL.-PHYS. HANS-J. NEUBAUER

EUROPEAN PATENT ATTORNEY

Fauststraße 30
D-8070 Ingolstadt

Telefon (08 41) 7 24 12
Telegramm neupat Ingolstadt
Telex 5 5809 nepa d

Frau

Frieda Jörn

Porschestraße 10

D - 7012 Fellbach

## Gelenke eines Doppelachsaggregats.

Die Erfindung betrifft Gelenke eines Doppelachsaggregats
mit zwei auf Blattfedern abgestützten Achsen für Lastkraftwagen, Transporter oder Omnibusse gemäß dem Oberbegriff des Anspruchs 1.

Bei Dreiachsern, z. B. schweren Lastkraftwagen für Baustellen, bilden die beiden hinteren Achsen ein unabhängiges Aggregat. Hierbei stützen sich beide Achsen
auf jeder Seite des Längsträgers über ein Blattfederpaket auf einem in der Mitte des Blattfederpakets liegenden, um die Querachse drehbaren Lager ab. Dadurch können
sich die beiden hinteren Radachsen den Geländeunebenheiten
anpassen und alle vier Räder werden stets gleichmäßig
belastet. Horizontal in Längs- und Querrichtung auf das
Fahrzeug wirkende Kräfte werden durch zusätzliche Lenker
aufgenommen. Der in der Mitte des Blattfederpakets
liegende, um die Fahrzeugquerachse drehbare Lagerpunkt
besteht aus einem am Längsträger befestigten Lagerbock, der einen kräftigen Stehbolzen trägt. Auf diesen ist ein Gehäuse mit einem Wälzlager, üblicherweise einem Kegelrollenlager, aufgeschoben, wobei das Lagergehäuse mit Federbriden mit der Mitte des Blattfederpakets verbunden ist. Ein solches Lager nimmt "Trampel-Bewegungen" bis über $\pm 20°$ auf. Die verwendeten Wälzlager sind wegen der erforderlichen engen Toleranzen kostspielig, unterliegen einem Verschleiß und sind zudem nicht wartungsfrei.

Aufgabe der Erfindung ist es demgegenüber, Gelenklager für ein Doppelachsaggregat zu schaffen, die preiswert herzustellen sind, keine engen Toleranzen erfordern und wartungsfrei sind.

Diese Aufgabe wird bei einem gattungsgemäßen Gelenk mit den kennzeichnenden Merkmalen des Anspruchs 1 gelöst.

Gemäß Anspruch 1 werden bei einem gattungsgemäßen Gelenk auf einen Stehbolzen zwei antisymmetrisch angeordnete Gummi-Metall-Buchsen aufgesteckt, an deren nach außen weisenden Enden je ein Flansch angebracht ist. Über die Gummi-Metall-Buchsen ist ein Aufnahmeauge geschoben, das mit seitlichen, vertikalen Anlageflächen zwischen den Flanschen liegt. Das Aufnahmeauge ist mit der Mitte des Blattfederpakets verbunden. Die in Richtung auf den Fahrgestell-Längsträger liegende Flanschseite liegt an einer feststehenden Abstützplatte an, während die gegenüber nach außen weisende Flanschseite an einer Druckplatte anliegt. Diese Druckplatte ist axial durch Verbindungsmittel mit dem Stehbolzen anziehbar. Die Befestigung der Gummi-Metall-Buchsen im Aufnahmeauge erfolgt durch das axiale Anziehen der Druckplatte und durch Verdrängen von Gummi, der im unbelasteten Zustand über die Buchsenlänge übersteht. Die so erzielte Vorspannung muß so groß sein, daß die Gummi-Metall-Buchse im Aufnahmeauge und am Stehbolzen durch Reibungshaftung so fest anliegt, daß auch beim Auftreten maximaler Kräfte und Drehmomente keine Gleitbewegung im Gelenk erfolgt. Die Verformungen im Gelenk sind somit gleit- und reibungsfrei und erfolgen nur durch Molekularverformung des elastischen Gummimaterials.

Da im Gelenk keine Gleit- oder Rollbewegungen durchgeführt werden, sind auch keine dafür speziell oberflächenbehandelten Gleit- und Reibflächen erforderlich. Vielmehr wird der Gummi lediglich in den Spalt zwischen dem Aufnahmeauge und dem Stehbolzen bzw. in die Spalte für die Flansche gedrängt, so daß diese Anlageflächen keiner speziellen Oberflächenbehandlung bedürfen und die Anordnung insgesamt mit relativ großen Toleranzen gefertigt sein kann. Dies trägt zu einer wesentlichen Einsparung bei den Herstellungskosten bei. Auch die Montage ist äußerst einfach, da nur die einzelnen Bauteile der Reihe nach auf den Stehbolzen aufgesteckt und mit der Druckplatte verspannt werden müssen, so daß auch die Montagekosten niedrig sind. Das erfindungsgemäße Gelenk ist wartungsfrei und weitestgehend verschleißfrei, da die einzelnen Teile keiner Reibung und damit keinem Abrieb unterworfen sind. Der Gummi-Metallkörper, der bei seiner Verdrehung auf Schub beansprucht wird, erhält im erfindungsgemäßen Gelenk eine radiale Druckspannung, die die Kettenmoleküle des Kautschuks orientiert, damit die Dauerhaltbarkeit unter Schubbeanspruchung erhöht und gleichzeitig örtliche Schrumpfspannungen ausgleicht.

Um bei verkantenden Kräften, z. B. seitlich am äußeren Radkranz wirkenden Kräften bei Kurvenfahrten, trotz des elastischen Materials der Gelenkbuchse eine exakte Vertikalführung zu erreichen, sind die Enden der Gelenkbuchsen außen mit axial steifen Flanschen versehen, die beim Zusammenspannen ebenfalls auf Druck vorgespannt werden.

Mit den Merkmalen des Anspruchs 2 wird vorgeschlagen, ein oder mehrere zylindrische Teile und davon getrennte Flanschteile zu verwenden. Eine solche Anordnung kann

4

sowohl bei der Herstellung als auch bei der Montage Vorteile bieten.

Mit den Merkmalen des Anspruchs 3 wird eine bevorzugte Ausführungsform erhalten, bei der die seitlichen Flansche durch einvulkanisierte Zwischenbleche zur Verhinderung der Querdehnung in axialer Richtung zusätzlich versteift sind. Damit wird die Verkantsteifigkeit weiter erhöht und die Vertikalführung weiter verbessert.

Gemäß Anspruch 4 enthalten die Gummi-Metall-Buchsen jeweils ein zylindrisches Innenrohr, das aus einem dünnwandigen, gerollten Blech besteht, dessen innere Mantelfläche am Stehbolzen anliegt und zur Erhöhung des Reibwertes mit einem Gummifilm versehen ist. Diese Ausführungsform ist preiswert herzustellen und hat bei der Erprobung allen Anforderungen genügt.

Anhand einer Zeichnung wird ein Ausführungsbeispiel der Erfindung mit weiteren Merkmalen, Einzelheiten und Vorteilen näher erläutert.

Es zeigen

Fig. 1   eine Seitenansicht auf ein Doppelachsaggregat,

Fig. 2   eine Draufsicht auf ein Doppelachsaggregat,

Fig. 3   einen Vertikalschnitt durch ein fertig montiertes Gelenk,

Fig. 4   einen vergrößerten Ausschnitt nach Fig. 3, wobei die linke Hälfte im vorgespannten Zustand und die rechte Hälfte im nicht vorgespannten Zustand dargestellt ist.

5

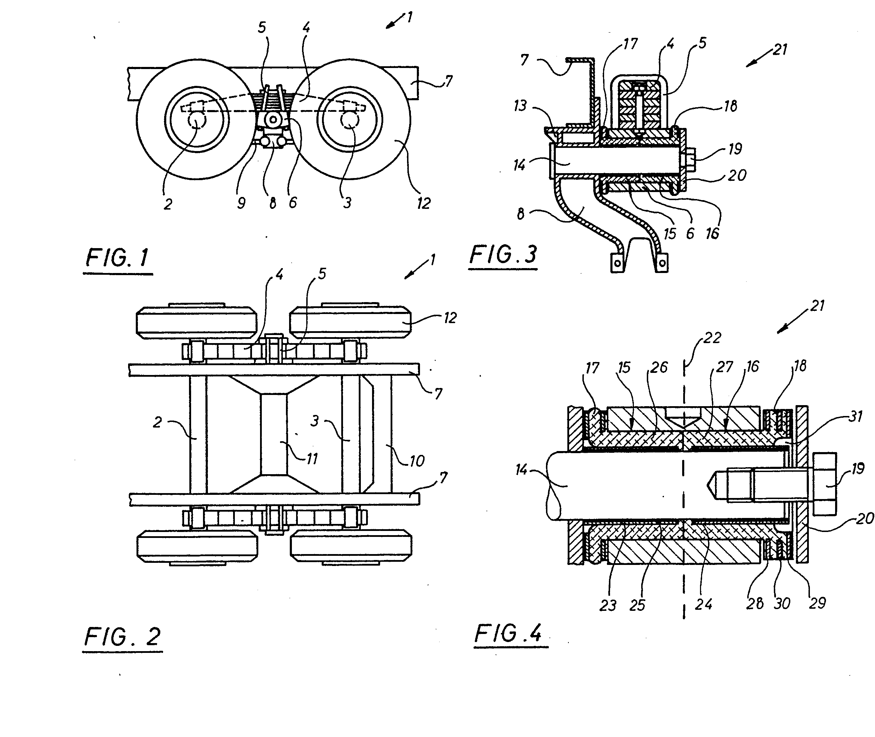

In Fig. 1 ist ein Doppelachsaggregat 1 dargestellt, mit zwei Achsen 2 und 3, die sich auf einem Blattfederpaket 4 abstützen. Das Blattfederpaket 4 ist in seinem mittleren Bereich über Federbriden 5 mit einem Aufnahmeauge 6 verbunden. Ein Lagerbock ist an einem Längsträger 7 befestigt und trägt einen nach unten weisenden Ansatz 8, an dem Kugelstangen 9 für die Horizontalführung des Doppelachsaggregats 1 angelenkt sind.

In der Draufsicht der Fig. 2 sind wieder die Längsträger 7, die Achsen 2, 3 und die durch Federbriden 5 gehaltenen Blattfederpakete 4 zu erkennen. Zwischen den Längsträgern 7 erstrecken sich Querträger 10, 11 und die Achsen 2, 3 tragen Räder 12.

Wenn beispielsweise ein Rad durch eine Fahrbahnunebenheit angehoben wird, geht auch das anliegende Federpaketende nach oben. Damit die beiden nebeneinanderliegenden Räder gleichmäßig belastet sind, ist das Blattfederpaket in der Mitte am Aufnahmeauge nicht starr mit dem Längsträger 7 verbunden, sondern in einem Bereich von etwa $\pm 20^{\circ}$ drehbar gelagert. Dadurch überträgt sich die beim Einfedern auftretende Kraft auch auf das danebenliegende Rad.

Eines dieser Gelenke ist in der Schnittzeichnung der Fig. 3 im Detail dargestellt. Der Längsträger 7 ist hier als U-Schiene ausgeführt. Daran befestigt ist ein Lagerbock 13, auf dem der Längsträger 7 sitzt. Der Lagerbock 13 hat einen nach unten abstehenden und zur Fahrzeugaußenseite hin gekrümmten Ansatz 8, an dem die (hier nicht dargestellten) Kugelstangen 9 angelenkt sind. Im Lagerbock 13 ist ein kräftiger, horizontal in Fahrzeugquerrichtung verlaufender Stehbolzen 14 gehalten. Auf den Stehbolzen 14 sind zwei Gummi-Metall-Buchsen 15, 16 mit seitlichen Flanschen 17, 18 aufgesteckt. Zwischen den Flanschen erstreckt sich das Aufnahmeauge 6, an das mittels der Federbriden 5 und einer Schraube das Federpaket 4 befestigt ist. Mit einer stirnseitig am Stehbolzen 14 angebrachten Schraube 19 und einer Druckplatte 20 wird das gesamte Gelenk 21 zusammengehalten und vorgespannt.

Der genaue Aufbau des Gelenks 21 wird im Zusammenhang mit der vergrößerten Darstellung der Fig. 4 erläutert. Links von der Linie 22 ist das Gelenk 21 bereits im fertig montierten und vorgespannten Zustand gezeichnet, während rechts von der Linie 22 das Gelenk 21 im noch nicht vorgespannten Zustand gezeichnet ist. Hieraus ist zu ersehen, daß die Gummi-Metall-Buchsen 15, 16 aus einem inneren, zylindrischen dünnen Blechmantel 23, 24 mit einer nach innen weisenden dünnen Gummischicht 25, einem zylindrischen, mit dem Blechmantel 23, 24 verbundenen Gummielement 26, 27 und mit daran anschließenden seitlichen Flanschen 17, 18 besteht. Die Flansche 17, 18 sind seitlich durch scheibenförmige Blechringe 28, 29, die ebenfalls eine dünne Gummischichtauflage aufweisen, begrenzt. Im Flansch können für eine weitere axiale Versteifung noch ein oder mehrere Zwischenbleche 30 einvulkanisiert sein.

Aus dem noch nicht zusammengespannten rechten Teil der Fig. 4 ist zu ersehen, daß die Gummi-Metall-Buchse 16 länger als die halbe Länge des Gelenks ist, so daß sie nach rechts über den Stehbolzen 14 vorsteht. In der dargestellten, zweckmäßigen und erprobten Ausführung steht der Blechmantel seitlich etwas über, erstreckt sich jedoch nicht ganz bis zur Mitte hin. Der Blechmantel wird seitlich noch vom Flansch 18 bzw. vom Blechring 29 überragt. Weiter ist zu erkennen, daß der anvulkanisierte Gummi nicht bis zum seitlichen Ende des Blechmantels 24 reicht sondern einen Ringspalt 31 bildet.

Beim Anziehen der Druckplatte 20 mit der Schraube 19 bis zur Anlage an der Stirnseite des Stehbolzens 14 wird die überstehende Gummi-Metall-Buchse und damit Gummi verdrängt. Eine Querdehnung aus dem zylindrischen Bereich wird dabei weitgehend von dem anvulkanisierten Blechmantel 23 verhindert, so daß sich der gewünschte hohe Druck aufbaut und die Verbindung zwischen der Gummi-Metall-Buchse 16 und dem Stehbolzen 14 bzw. dem Aufnahmeauge 6 durch Reibungshaftung ergibt. Bei der Verdrängung des Gummis wird auch der Ringspalt 31 ausgefüllt, so daß sich der auf der linken Seite der Fig. 4 dargestellte Zustand ergibt, d. h. die Gummi-Metall-Buchse 15 hat im unbelasteten Zustand die gleiche Form wie die so dargestellte Gummi-Metall-Buchse 16. Die aufgezeigte spezielle Formgebung hat vorteilhaft zur Folge, daß die Belastungen im Gummi weitgehend gleichmäßig verlaufen und keine Belastungsspitzen an Haftungsflächen auftreten.

Die Flansche 17, 18 sind aufgrund der einvulkanisierten Blechringe 28, 29 und eventueller Zwischenbleche 30 wegen der dadurch verhinderten Querdehnung steif, so daß eine gute Vertikalführung erreicht wird.

Die Montage des Gelenks 21 ist einfach und schnell durchführbar. Auf den Stehbolzen 14 wird die Gummi-Metall-Buchse 15 gesteckt und mit ihrem Flansch 17 an einer Fläche des Lagerbocks 13 zur Anlage gebracht. Anschließend wird das Aufnahmeauge 6 und die zweite Gummi-Metall-Buchse 16 aufgesteckt. Nach Aufsetzen und Verschrauben der Druckplatte 20 ist das Gelenk 21 fertig montiert.

Das Gelenk 21 hat folgende Funktion: Beim Einfedern eines Rades 12 wird das Blattfederpaket 4 um den Stehbolzen 14 etwas gedreht. Diese Drehung ist zur gleichmäßigen Belastung der nebeneinanderliegenden Räder gewünscht. Die Drehbewegung im Gelenk 21 wird ganz vom Gummi aufgenommen, so daß keine Gleit- und Reibbewegungen auftreten. Verkantende Kräfte werden für eine gute Vertikalführung von den axial steifen Flanschen aufgenommen.

Zusammenfassend wird festgestellt, daß mit der Erfindung ein preiswertes, wartungsfreies und den Forderungen der Praxis entsprechendes Gelenk für ein Doppelachsaggregat zur Verfügung gestellt wird.

PATENTANWALT

# DIPL.-PHYS. HANS-J. NEUBAUER

EUROPEAN PATENT ATTORNEY

Frau

Frieda Jörn

Porschestraße 10

D - 7012 Fellbach

Fauststraße 30
D-8070 Ingolstadt

Telefon (08 41) 7 24 12
Telegramm neupat Ingolstadt
Telex 5 5809 nepa d

## Patentansprüche

1. Gelenke eines Doppelachsaggregats mit zwei auf Blattfedern abgestützten Achsen für Lastkraftwagen, Transporter oder Omnibusse,

wobei die Gelenke unter den Blattfedermitten liegen und auf beiden Seiten der Fahrgestell-Längsträger unabhängig voneinander auf je einem, am Längsträger befestigten Stehbolzen angebracht sind,

dadurch gekennzeichnet,

daß die Gelenke (21) aus zwei antisymmetrisch auf die Stehbolzen (14) aufgesteckten Gummi-Metall-Buchsen (15, 16) bestehen, an deren äußeren Enden je ein Flansch (17, 18) angebracht ist,

daß ein mit der Blattfedermitte verbindbares Aufnahmeauge (6) mit einer zylindrischen Bohrung über die Gummi-Metall-Buchsen (15, 16) geschoben ist und mit seitlichen, vertikalen Anlageflächen zwischen den Flanschen (17, 18) liegt,

daß an der in Richtung auf den Fahrgestell-Längsträger (7) liegenden Gelenkseite eine feststehende Anlagefläche für eine Flanschseite angebracht ist, und

daß eine senkrecht zum Stehbolzen (14) liegende und axial durch Verbindungsmittel (19) am Stehbolzen (14) anziehbare Druckplatte (20) als Anlagefläche für die äußere Flanschseite vorgesehen ist, wobei die Befestigung der Gummi-Metall-Buchsen (15, 16) durch das axiale Anziehen der Druckplatte (20) und von in der Buchsenlänge überstehendem Gummi erfolgt, so daß die Verformungen im Gelenk (21) gleit- und reibungsfrei nur durch Molekularverformung des elastischen Gummis erfolgen.

2. Gelenk eines Doppelachsaggregats nach Anspruch 1, dadurch gekennzeichnet, daß die Buchse (15, 16) aus einem zylindrischen Teil und davon getrennten Flanschteil besteht.

3. Gelenk eines Doppelachsaggregats nach Anspruch 1 oder 2, dadurch gekennzeichnet, daß die Flansche (17, 18) einvulkanisierte Zwischenbleche (30) zur Versteifung in axialer Richtung enthalten.

4. Gelenk eines Doppelachsaggregats nach einem der Ansprüche 1 bis 4, dadurch gekennzeichnet, daß die Gummi-Metall-Buchsen (15, 16) ein zylindrisches Innenrohr (23) aus dünnwandigem, gerolltem Blech enthalten, dessen innere Mantelfläche zur Erhöhung des Reibwertes mit einem Gummifilm (25) versehen ist.

FIG.1

FIG.2

FIG.3

FIG.4

1/1

01141894